# EUROPEAN PATENT SPECIFICATION

(11) **EP 2 937 364 B1**
(45) Date of publication and mention of the grant of the patent: **02.11.2016**
(21) Application number: 15159718.4
(22) Date of filing: 18.03.2015
(51) Int. Cl.: C08C 19/22, C08C 19/26, C08L 7/00, C08L 9/00, B60C 1/00, B60C 5/00, B60C 17/00

(54) **SIDEWALL INSERT RUBBER COMPOSITION FOR RUN-FLAT TIRE AND TIRE PRODUCED USING THE SAME**
SEITENWANDEINSATZGUMMIZUSAMMENSETZUNG FÜR NOTLAUFREIFEN UND DARAUS HERGESTELLTER REIFEN
COMPOSITION DE CAOUTCHOUC À INSERT DE PAROI LATÉRALE POUR PNEUMATIQUE À AFFAISSEMENT LIMITÉ ET PNEU OBTENU À L'AIDE DE CELLE-CI

(30) Priority: 22.04.2014 KR 20140047849
(43) Date of publication of application: 28.10.2015
(73) Proprietor: Hankook Tire Co., Ltd., Seoul 135-723 (KR)
(72) Inventor: Lim, Ki Won, 360-774 Cheongju-si, Chungcheongbuk-do (KR); Han, Yoon Sung, 305-725 Daejeon (KR)
(74) Representative: Petraz, Gilberto Luigi

(56) References cited:
- EP-A1- 0 985 554
- EP-A1- 2 289 990
- EP-A1- 2 377 693
- EP-A2- 0 988 999
- EP-A2- 2 514 789

## Description

### BACKGROUND OF THE INVENTION

### 1. Field of the Invention

The present invention relates to a sidewall insert rubber composition for run-flat tire and a tire produced using the rubber composition. More particularly, the invention relates to a sidewall insert rubber composition for run-flat tire which has both excellent strength and excellent low fuel consumption performance, and to a tire produced using the same rubber composition.

### 2. Description of the Related Art

Recently, as the performance of automobiles is ever improving, there is a rapidly increasing demand for performance enhancement of tires. Particularly, there is a rapidly increasing demand for a run-flat tire that allows a car to safely drive even if a tire has a decreased air pressure or a puncture and to have the tire exchanged safely. Thus, many tire manufacturers in the world are concentrating on the securement of technologies for runflat tires that can drive safely over a certain distance while supporting the load of the vehicle even in the case where the pneumatic pressure of tires has been decreased, and securement of advanced technologies for prior occupation of the market.

A run-flat tire is a sidewall self supporting type tire in which insert rubber having high strength is generally used in the sidewall portion, and which allows the vehicle to drive while supporting the load of the vehicle even if a loss of the pneumatic pressure occurs. Thus, a significant weight of sidewall insert rubber is used.

Along with the demand for an enhancement of the low fuel consumption performance of vehicles as a result of the global tire labeling system and the restriction on the carbon dioxide emission, the low fuel consumption performance of run-flat tires is becoming very important, and accordingly, the conditions for low fuel consumption required from run-flat tires as suggested by automobile manufacturers are continually fortified. Thus, research and technical development is being conducted significantly in order to enhance the low fuel consumption performance while maintaining the safety performance of a run-flat tire, which is heavier in weight compared with general tires.

As discussed above, sidewall insert rubber should have very high strength for the purpose of self-supporting. For this reason, a filler may be incorporated in an excessive amount; however, an excessive amount of filler may deteriorate the low fuel consumption performance, thereby causing a problem in the durability performance. Therefore, it is a circumstance in which there is an urgent demand for a technology for maintaining or enhancing strength while enhancing the low fuel consumption performance compared with existing sidewall insert rubbers.

EP 2289990 A1 describes a known rubber composition containing silica reinforcement and functionalized polybutadiene rubber. EP 2377693 A1 describes a known type of pneumatic tire. EP 2514789 A2 describes another known rubber composition for sidewall reinforcing layer. EP 0985554 A1 describes a known type of runflat tire. EP 0988999 A2 describes a known antireversion agent for inserts used in runflat tires.

### SUMMARY OF THE INVENTION

An object of the present invention is to provide a sidewall insert rubber composition for run-flat tire, in which the strength of the insert rubber that contributes most to the stability of the run-flat tire has been improved, while the low fuel consumption performance is maintained or improved.

Another object of the present invention is to provide a tire produced using the sidewall insert rubber composition for run-flat tire described above.

In order to achieve the objects described above, a sidewall insert rubber composition for run-flat tire according to one aspect of the present invention includes 10 to 100 parts by weight of a raw material rubber including a functionalized, solution-polymerized butadiene rubber having a glass transition temperature of -95°C to - 70°C and having a vinyl content of 5% to 25% by weight; and 40 to 110 parts by weight of a filler.

The functionalized, solution-polymerized butadiene rubber may be a rubber that has been functionalized by any one coupling agent selected from the group consisting of a tin coupling agent, an amine-based coupling agent, a lactam-based coupling agent, and mixtures thereof.

The functionalized, solution-polymerized butadiene rubber may be included in an amount of 10 to 40 parts by weight relative to 100 parts by weight of the raw material rubber.

The filler may include a carbon black having an oil adsorption amount of 80 to 100 cc/100 g and an iodine adsorption amount of 25 to 45 mg/g.

The carbon black may be included in an amount of 40 to 70 parts by weight relative to 100 parts by weight of the raw material rubber.

The filler may additionally include a silica having a nitrogen adsorption specific surface area of 80 to 200 m²/g and a cetyltrimethylammonium bromide (CTAB) adsorption specific surface area of 70 to 180 m²/g.

A tire according to another embodiment of the present invention is produced using the sidewall insert rubber composition for run-flat tire.

### DETAILED DESCRIPTION OF THE PREFERRED EMBODIMENTS

Hereinafter, the present invention will be described in more detail.

The sidewall insert rubber composition for run-flat tire according to an embodiment of the present invention includes 10 to 100 parts by weight of a raw material rubber including a functionalized, solution-polymerized butadiene rubber having a glass transition temperature of -95°C to - 70°C and a vinyl content of 5% to 25% by weight; and 40 to 110 parts by weight of a filler.

The sidewall insert rubber composition is to provide a run-flat tire that can drive a certain distance while supporting the load of the vehicle even if a loss of the pneumatic pressure in the tire occurs, and can provide a sidewall insert rubber having excellent strength while securing low fuel consumption performance, by using a rubber having excellent miscibility with a filler and thereby enhancing the interaction with the filler.

The present invention employs a functionalized, solution-polymerized butadiene rubber as the rubber having excellent miscibility. Furthermore, in order to obtain excellent interaction with a filler such as carbon black, the present invention uses a butadiene rubber having a glass transition temperature of -95° to -70°C and a vinyl content in the entire butadiene rubber of 5% to 25% by weight, as the functionalized, solution-polymerized butadiene rubber.

The functionalized, solution-polymerized butadiene rubber may be a rubber obtained by functionalizing a solution-polymerized butadiene rubber using a coupling agent. The functionalized, solution-polymerized butadiene rubber enhances the affinity between the raw material rubber and the filler and improves dispersibility of the filler, and thereby, the functionalized, solution-polymerized butadiene rubber plays the role of decreasing hysteresis.

Regarding the coupling agent that can provide the functionalized, solution-polymerized butadiene rubber, a coupling agent capable of enhancing the miscibility between the raw material rubber and the carbon black or silica used as a filler of the tire rubber, can be used. Specifically, an example of the coupling agent may be any one coupling agent selected from the group consisting of a tin coupling agent, an amine-based coupling agent, a lactam-based coupling agent, and mixtures thereof. According to an embodiment, if carbon black is employed as the filler, or if a dual system which uses carbon black and silica is employed, two kinds of coupling agents may be used as the coupling agent, while it is advantageous in view of the low heat generation characteristics to use a tin coupling agent as at least one of them.

Regarding the functionalized, solution-polymerized butadiene rubber, a butadiene rubber having a molecular weight distribution of 1 to 4 can be used in order to obtain uniform miscibility with the filler and satisfactory processability.

The raw material rubber may additionally include a rubber other than the functionalized, solution-polymerized butadiene rubber. At this time, the functionalized, solution-polymerized butadiene rubber may be included in an amount of 10 to 40 parts by weight relative to 100 parts by weight of the raw material rubber. When the functionalized, solution-polymerized butadiene rubber is used in an amount of that range, both high strength and the low fuel consumption performance of the sidewall insert rubber for run-flat tire can be secured.

The raw material rubber may include any one selected from the group consisting of natural rubber, a synthetic rubber and combinations thereof, in addition to the functionalized, solution-polymerized butadiene rubber.

The natural rubber may be a common natural rubber or a modified natural rubber.

Regarding the common natural rubber, any rubber known as natural rubber can be used, and there are no limitations on the place of production or the like. The natural rubber include cis-1,4-polyisoprene as a main component; however, the natural rubber may include trans-1,4-polyisoprene depending on the required characteristics. Therefore, the natural rubber may include a natural rubber having cis-1,4-polyisoprene as a main component, as well as a natural rubber having trans-1,4-isoprene as a main component, for example, gutta-balata which is a kind of rubber of the Sapota family manufactured by South America.

The modified natural rubber means a product obtained by modifying or purifying the common natural rubber. Examples of the modified natural rubber include epoxidated natural rubber (ENR), deproteinated natural rubber (DPNR), and hydrogenated natural rubber.

The synthetic rubber may be any one selected from the group consisting of a styrene-butadiene rubber (SBR), a modified styrene-butadiene rubber, a butadiene rubber (BR), a modified butadiene rubber, a chlorosulfonated polyethylene rubber, an epichlorohydrin rubber, a fluororubber, a silicone rubber, a nitrile rubber, a hydrogenated nitrile rubber, a nitrile-butadiene rubber (NBR), a modified nitrile-butadiene rubber, a chlorinated polyethylene rubber, a styrene-ethylene-butylene-styrene (SEBS) rubber, an ethylene-propylene rubber, an ethylene-propylene-diene (EPDM) rubber, a Hypalon rubber, a chloroprene rubber, an ethylene-vinyl acetate rubber, an acrylic rubber, a hydrin rubber, a vinyl-benzyl chloride-styrene-butadiene rubber, a bromomethyl-styrene-butyl rubber, a maleic acid-styrene-butadiene rubber, a carboxylic cid-styrene-butadiene rubber, an epoxy-isoprene rubber, a maleic acid-ethylene-propylene rubber, a carboxylic acid-nitrile-butadiene rubber, a brominated polyisobutylisoprene-co-paramethylstyrene (BIMS), and combinations thereof.

Particularly, for the raw material rubber, natural rubber and a butadiene rubber may be used together with a functionalized, solution-polymerized butadiene rubber. A raw material rubber of the combination such as described above can exhibit the rubber strength suitable for the run-flat tire applications, and exhibits excellent miscibility with fillers so that excellent heat generation resistance performance can also be secured.

The filler means a material that may be added to the sidewall insert rubber composition so as to enhance the strength of rubber. The filler may be used in an amount of 40 to 110 parts by weight relative to 10 to 100 parts by weight of the raw material rubber, preferably in an amount of 40 to 110 parts by weight relative to 20 to 100 parts by weight of the raw material rubber, and most preferably in an amount of 40 to 110 parts by weight relative to 100 parts by weight of the raw material rubber. If the content of the filler is less than the range described above, the reinforcing performance provided by the filler may be deteriorated, and if the content exceeds the range described above, the rubber composition may have poor processability, and an increase in hysteresis may be brought about.

The filler may be, for example, any one selected from the group consisting of carbon black, silica, calcium carbonate, clay (hydrated aluminum silicate), aluminum hydroxide, lignin, silicic acid salts, talc, and combinations thereof.

The carbon black may have an oil adsorption amount (OAN) of 80 to 100 cc/100 g, and an iodine adsorption amount of 25 to 45 mg/g. Furthermore, the carbon black may have a hydrogen ion index (pH) of 6 to 10, but the present invention is not intended to be limited to this.

If the oil adsorption amount of the carbon black is more than 100 cc/100 g, and the iodine adsorption amount is more than 45 mg/g, dispersion of the filler may be very difficult, and an excessive increase in toughness and an increase in hysteresis may be brought about. Also, processability of the sidewall insert rubber composition may become poor. On the other hand, if the oil adsorption amount of the carbon black I less than 80 cc/100 g, and the amount of iodine adsorption amount is less than 25 mg/g, the reinforcing performance provided by the carbon black as a filler may become poor.

Representative examples of the carbon black include N110, N121, N134, N220, N231, N234, N242, N293, N299, S315, N326, N330, N332, N339, N343, N347, N351, N358, N375, N539, N550, N582, N630, N642, N650, N660, N683, N754, N762, N765, N774, N787, N907, N908, N990 and N991.

The carbon black may be included in an amount of 40 to 70 parts by weight relative to 100 parts by weight of the raw material rubber, and is preferably included in an amount of 40 to 60 parts by weight relative to 100 parts by weight of the raw material rubber. If the content of the carbon black is less than 40 parts by weight, the reinforcing performance provided by the carbon black as a filler may be deteriorated, and if the content is more than 70 parts by weight the rubber composition may have poor processability.

When silica is added together with carbon black as the filler, a sidewall insert rubber composition having enhanced low fuel consumption performance as well as increased strength can be provided.

The silica may have a nitrogen adsorption specific surface area (nitrogen surface area per gram, N₂SA) of 80 to 200 m²/g, and a cetyltrimethylammonium bromide (CTAB) adsorption specific surface area of 70 to 180 m²/g. Furthermore, the silica may have a hydrogen ion index (pH) of 5 to 8, but the present invention is not intended to be limited thereto.

If the nitrogen adsorption specific surface area of the silica is less than 80 m²/g, and a CTAB adsorption specific surface area of less than 70 m²/g, the strength increasing effect of the raw material rubber is negligible. If the nitrogen adsorption specific surface area is more than 200 m²/g, and the CTAB adsorption specific surface area is more than 180 m²/g, dispersion of the filler is very difficult, and an excessive increase in toughness and an increase in hysteresis may be brought about.

For the silica, products produced by a wet method or a dry method may all be used, and examples of commercially available products that can be used include ULTRASIL VN2 (manufactured by Degussa AG), ULTRASIL VN3 (manufactured by Degussa AG), Z1165MP (manufactured by Rhodia SA), and Z165GR (manufactured by Rhodia SA).

The silica may be included in an amount of 10 to 40 parts by weight relative to 100 parts by weight of the raw material rubber, and is preferably included in an amount of 10 to 30 parts by weight, and more preferably in an amount of 15 to 25 parts by weight. If the content of the silica is less than 10 parts by weight the strength enhancement of the rubber may be insufficient, and if the content of the silica is more than 40 parts by weight, an increase in hysteresis may be brought about.

In a case in which the rubber composition includes silica as a filler, a coupling agent may be used in order to increase the dispersibility of silica in the raw material rubber.

Regarding the coupling agent, any one selected from the group consisting of a sulfide-based silane compound, a mercapto-based silane compound, a vinyl-based silane compound, an amino-based silane compound, a glycidoxy-based silane compound, a nitro-based silane compound, a chloro-based silane compound, a methacrylic silane compound, and combinations thereof, and a sulfide-based silane compound can be preferably used.

The sulfide-based silane compound may be any one selected from the group consisting of bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(4-trimethoxysilylbutyl) tetrasulfide, bis(3-triethoxysilylpropyl) trisulfide, bis(2-triethoxysilylethyl) trisulfide, bis(4-triethoxysilylbutyl) trisulfide, bis(3-trimethoxysilylpropyl) trisulfide, bis(2-trimethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis (3-trimethoxysilylpropyl) disulfide, bis(2-trimethoxysilylethyl) disulfide, bis(4-trimethoxysilylbutyl) disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropyl benzothiazolyl tetrasulfide, 3-triethoxysilylpropyl benzothiazolyl tetrasulfide, 3-trimethoxysilylpropyl methacrylate monosulfide, 3-trimethoxysilylpropyl methacrylate monosulfide, and combinations thereof.

The mercaptosilane compound may be any one selected from the group consisting of 3-mercaptopropyltrimethoxysilane, 3-mercaptopropyltriethoxysilane, 2-mercaptoethyltrimethoxysilane, 2-mercaptoethyltriethoxysilane, and combinations thereof. The vinyl-based silane compound may be any one selected from the group consisting of ethoxysilane, vinyltrimethoxysilane, and combinations thereof. The amino-based silane compound may be any one selected from the group consisting of 3-amiopropyltriethoxysilane, 3-aminopropyltrimethoxysilane, 3-(2-aminoethyl)aminopropyltriethoxysilane, 3-(2-aminoethyl)aminopropyltrimethoxysilane, and combinations thereof.

The glycidoxy-based silane compound may be any one selected from the group consisting of γ-glycidoxypropyltriethoxysilane, γ-glycidoxypropyltrimethoxysilane, γ-glycidoxypropylmethyldiethoxysilane, γ-glycidoxypropylmethyldimethoxysilane, and combinations thereof. The nitro-based silane compound may be any one selected from the group consisting of 3-nitropropyltrimethoxysilane, 3-nitropropyltriethoxysilane, and combinations thereof. The chloro-based silane compound may be any one selected from the group consisting of 3-chloropropyltrimethoxysilane, 3-chloropropyltriethoxysilane, 2-chloroethyltrimethoxysilane, 2-chloroethyltriethoxysilane, and combinations thereof.

The methacrylic silane compound may be any one selected from the group consisting of γ-methacryloxypropyltrimethoxysilane, γ-methacryloxypropylmethyldimethoxysilane, γ-methacryloxypropyldimethylmethoxysilane, and combinations thereof.

The coupling agent may be included in an amount of 1 to 20 parts by weight relative to 100 parts by weight of the raw material rubber for the purpose of enhancing the dispersibility of the silica. If the content of the coupling agent is less than 1 part by weight, the enhancement of the dispersibility of silica may be insufficient, and processability of the rubber may be deteriorated, or the low fuel consumption performance may be deteriorated. If the content is more than 20 parts by weight, processability may become poor due to excessive interaction between the silica and the rubber, and the durability performance may be seriously deteriorated.

The sidewall insert rubber composition may further selectively include various additional additives such as a vulcanizing agent, a vulcanization accelerator, a vulcanization accelerator aid, an anti-aging agent, a softening agent, and a tacky adhesive. Regarding these various additives, any additives that are conventionally used in the art to which the present invention is pertained can be used, and the contents of these additives are not particularly limited as long as the contents conform to the mixing ratios used in conventional sidewall insert rubber compositions.

A sulfur-based vulcanizing agent can be preferably used as the vulcanizing agent. Examples of the sulfur-based vulcanizing agent that can be used include inorganic vulcanizing agents such as powdered sulfur (S), insoluble sulfur (S), precipitated sulfur (S), and colloidal sulfur; and organic vulcanizing agents such as tetramethylthiuram disulfide (TMTD), tetraethylthiuram disulfide (TETD), and dithiodimorpholine. Specific examples of the sulfur-based vulcanizing agent that can be used include elemental sulfur, a vulcanizing agent capable of producing sulfur, for example, amine disulfide or polymeric sulfur.

The vulcanizing agent is suitably included in an amount of 0.5 to 10 parts by weight relative to 100 parts by weight of the raw material rubber, and this amount is preferable from the viewpoint that the raw material rubber is made less sensitive to heat and chemically stable as a result of an appropriate vulcanization effect.

The vulcanization accelerator means an accelerator capable of accelerating the vulcanization rate or accelerating any delaying action in the early vulcanization stages.

For the vulcanization accelerator, any one selected from the group consisting of a sulfenamide-based agent, a thiazole-based agent, a thiuram-based agent, a thiourea-based agent, a guanidine-based agent, a dithiocarbamic acid-based agent, an aldehyde-amine-based agent, an aldehyde-ammonia-based agent, an imidazoline-based agent, a xanthate-based agent, and combinations thereof can be used.

Regarding the sulfenamide-based vulcanization accelerator, for example, any one sulfenamide-based compound selected from the group consisting of N-cyclohexyl-2-benzothiazylsulfenamide (CBS), N-tert-butyl-2-benzothiazylsulfenamide (TBBS), N,N-dicyclohexyl-2-benzothiazylsulfenamide, N-oxydiethylene-2-benzothiazylsulfenamide, N,N-diisopropyl-2-benzothiazole sulfenamide, and combinations thereof can be used.

Regarding the thiazole-based vulcanization accelerator, for example, any one thiazole-based compound selected from the group consisting of 2-mercaptobenzothiazole (MBT), dibenzothiazyl disulfide (MBTS), 2-mercaptobenzothiazole sodium salt, 2-mercaptobenzothiazole zinc salt, 2-mercaptobenzothiazole copper salt, 2-mercaptobenzothiazole cyclohexylamine salt, 2-(2,4-dinitrophenyl)mercaptobenzothiazole, 2-(2,6-diethyl-4-morpholinothio)benzothiazole, and combinations thereof can be used.

Regarding the thiuram-based vulcanization accelerator, for example, any one thiuram-based compound selected from the group consisting of tetramethylthiuram disulfide (TMTD), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, pentamethylenethiuram tetrasulfide, and combinations thereof can be used.

Regarding the thiourea-based vulcanization accelerator, for example, any one thiourea-based compound selected from the group consisting of thiacarbamide, diethylthiourea, dibutylthiourea, trimethylthiourea, di-ortho-tolylthiourea, and combinations thereof can be used.

Regarding the guanidine-based vulcanization accelerator, for example, any one guanidine-based compound selected from the group consisting of diphenylguanidine, di-ortho-tolylguanidine, triphenylguanidine, orthotolylbiguanide, diphenylguanidine phthalate, and combinations thereof can be used.

Regarding the dithiocarbamic acid-based vulcanization accelerator, for example, any one dithiocarbamic acid-based compound selected from the group consisting of zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecylisopropyldithiocarbamate, zinc octadecylisopropyldithiocarbamate, zinc dibenzyldithiocarbamate, sodium diethyldithiocarbamate, piperidine pentamethylenedithiocarbamate, selenium dimethyldithiocarbamate, tellurium diethyldithiocarbamate, cadmium diamyldithiocarbamate, and combinations thereof can be used.

Regarding the aldehyde-amine-based or aldehyde-ammonia-based vulcanization accelerator, for example, any one aldehyde-amine-based or aldehyde-ammonia-based compound selected from the group consisting of acetaldehyde-aniline reaction product, butylaldehyde-aniline condensation product, hexamethylenetetramine, acetaldehyde-ammonia reaction product, and combinations thereof can be used.

Regarding the imidazoline-based vulcanization accelerator, for example, an imidazoline-based compound such as 2-mercaptoimidazoline can be used, and regarding the xanthate-based vulcanization accelerator, for example, a xanthate-based compound such as zinc dibutylxanthogenate can be used.

The vulcanization accelerator may be included in an amount of 0.5 to 10 parts by weight relative to 100 parts by weight of the raw material rubber, in order to maximize the increase of productivity through the acceleration of the rate of vulcanization, and the enhancement of rubber properties.

The vulcanization accelerator aid is a mixing agent used in combination with the vulcanization accelerator in order to perfect the acceleration effect. Any one selected from the group consisting of inorganic vulcanization accelerator aids, organic vulcanization accelerator aids, and combinations thereof can be used.

Regarding the inorganic vulcanization accelerator aid, any one selected from the group consisting of zinc oxide (ZnO), zinc carbonate, magnesium oxide (MgO), lead oxide, potassium hydroxide, and combinations thereof can be used. Regarding the organic vulcanization accelerator aid, any one selected from the group consisting of stearic acid, zinc stearate, palmitic acid, linoleic acid, oleic acid, lauric acid, dibutylammonium oleate, derivatives thereof, and combinations thereof can be used.

Particularly, zinc oxide and stearic acid can be used together as the vulcanization accelerator aid, and in this case, zinc oxide dissolves in stearic acid and forms an effective complex with the vulcanization accelerator. This produces free sulfur during the vulcanization reaction, and thereby facilitates the cross-linking reaction of rubber.

In the case of using zinc oxide and stearic acid together, the substances can be used in amounts of 1 to 10 parts by weight, and 0.5 to 5 parts by weight, respectively, relative to 100 parts by weight of the raw material rubber, in order to induce appropriate roles of the vulcanization accelerator aids. If the contents of zinc oxide and stearic acid are less than the ranges described above, the rate of vulcanization may be decreased, and productivity may be deteriorated. If the contents exceed the ranges described above, a scorching phenomenon may occur, and properties may be deteriorated.

The softening agent means a material that is added to the rubber composition in order to impart plasticity to rubber and facilitate processing thereof, or in order to decrease the hardness of vulcanized rubber. The softening agent may be any oily material that is used at the time of mixing rubber raw materials or at the time of rubber production. The softening agent means a process oil, or any other oil that is included in a rubber composition. Regarding the softening agent, any one selected from the group consisting of petroleum-based oils, plant oils and fats, and combinations thereof can be used; however, the present invention is not intended to be limited to these.

Regarding the petroleum-based oil, any one selected from the group consisting of paraffin-based oils, naphthene-based oils, aromatic oils, and combinations thereof can be used.

Representative examples of the paraffin-based oils include P-1, P-2, P-3, P-4, P-5, and P-6 manufactured by Michang Oil Industry Co., Ltd., and representative examples of the naphthene-based oils include N-1, N-2 and N-3 manufactured by Michang Oil Industry Co., Ltd. Representative examples of the aromatic oils include A-2 and A-3 manufactured by Michang Oil Industry Co., Ltd.

However, along with the recent rise of environmental awareness, since it is known that when the content of polycyclic aromatic hydrocarbons (hereinafter, referred to as PAHs) included in the aromatic oils is 3% by weight or more, the aromatic oils have a high potential of carcinogenesis, treated distillate aromatic extract (TDAE) oil, mild extract solvate (MES) oil, residual aromatic extract (RAE) oil, or heavy naphthenic oil can be preferably used.

Particularly, regarding the oil used as the softening agent, a TDAE oil having a total content of PAH components relative to the total amount of the oil of 3% by weight or less, a dynamic viscosity of 95 or more (210°F SUS), a content of aromatic components in the softening agent of 15% to 25% by weight, a content of naphthenic components of 27% to 37% by weight, and a content of paraffin-based components of 38% to 58% by weight, can be preferably used.

The TDAE oil excellently improves the low temperature characteristics of the tire containing the TDAE oil and the fuel consumption performance, and has advantageous characteristics also for environmental factors such as the potential for carcinogenesis of PAH's.

Regarding the plant oils and fats, any one selected from the group consisting of castor oil, cotton seed oil, linseed oil, canola oil, soybean oil, palm oil, coconut oil, peanut oil, pine oil, pine tar, tall oil, corn oil, rice bran oil, safflower oil, sesame oil, olive oil, sunflower oil, palm kernel oil, camellia oil, jojoba oil, macadamia nut oil, safflower oil, tung oil, and combinations thereof can be used.

It is preferable to use the softening agent in an amount of 0 to 150 parts by weight relative to 100 parts by weight of the raw material rubber, from the viewpoint of improving processability of the raw material rubber.

The anti-aging agent is an additive used for stopping the chain reaction by which a tire is spontaneously oxidized by oxygen. Regarding the anti-aging agent, any one selected from the group consisting of amine-based agents, phenol-based agents, quinoline-based agents, imidazole-based agents, carbamic acid metal salts, waxes, and combinations thereof can be appropriately selected and used.

Regarding the amine-based anti-aging agent, any one selected from the group consisting of N-phenyl-N'-(1,3-dimethyl)-p-phenylenediamine, N-(1,3-dimethylbutyl)-N'-phenyl-p-phenylenediamine, N-phenyl-N'-isopropyl-p-phenylenediamine, N,N'-diphenyl-p-phenylenediamine, N,N'-diaryl-p-phenylenediamine, N-phenyl-N'-cyclohexyl-p-phenylenediamine, N-phenyl-N'-octyl-p-phenylenediamine, and combinations thereof can be used. Regarding the phenol-based anti-aging agent, any one selected from the group consisting of phenolic compounds such as 2,2'-methylenebis(4-methyl-6-tert-butylphenol), 2,2'-isobutylidenebis(4,6-dimethylphenol), 2,6-di-t-butyl-p-cresol, and combinations thereof can be used. Regarding the quinoline-based anti-aging agent, 2,2,4-trimethyl-1,2-dihydroquinoline and derivatives thereof can be used, and specifically, any one selected from the group consisting of 6-ethoxy-2,2,4-trimethyl-1,2-dihydroquinoline, 6-anilino-2,2,4-trimethyl-1,2-dihydroquinoline, 6-dodecyl-2,2,4-trimethyl-1,2-dihydroquinoline, and combinations thereof can be used. Regarding the wax, waxy hydrocarbons can be preferably used.

Regarding the anti-aging agent, when conditions other than the anti-aging effect, such as that the anti-aging agent should have high solubility in rubber and low volatility, should be inactive to rubber, and should not inhibit vulcanization, are taken into consideration, the anti-aging agent may be incorporated in an amount of 0.1 to 10 parts by weight relative to 100 parts by weight of the raw material rubber.

The tacky adhesive further enhances the adhesion performance between rubber and rubber, and contributes to an enhancement of the properties of rubber by improving miscibility, dispersibility and processability of other additives such as a filler.

Examples of the tacky adhesive that can be used include natural resin-based tacky adhesives such as a rosin-based resin and a terpene-based resin; and synthetic resin-base tacky adhesives such as a petroleum resin, coal tar, and alkylphenol-based resins.

The rosin-based resin may be any one selected from the group consisting of a rosin resin, a rosin ester resin, a hydrogenated rosin ester resin, derivatives thereof and combinations thereof. The terpene-based resin may be any one selected from the group consisting of a terpene resin, a terpene-phenol resin, and combinations thereof.

The petroleum resin may be any one selected from the group consisting of an aliphatic resin, an acid-modified aliphatic resin, an alicyclic resin, a hydrogenated alicyclic resin, an aromatic (C9) resin, a hydrogenated aromatic resin, a C5-C9 copolymerized resin, a styrene resin, a styrene copolymer resin, and combinations thereof.

The coal tar may be a coumarone-indene resin.

The alkylphenol resin may be a p-tert-alkylphenol formaldehyde resin or a resorcinol formaldehyde resin, and the p-tert-alkylphenol formaldehyde resin may be any one selected from the group consisting of a p-tert-butylphenol formaldehyde resin, a p-tert-octylphenol formaldehyde resin, and combinations thereof.

The tacky adhesive may be included in an amount of 0 to 4 parts by weight relative to 100 parts by weight of the raw material rubber. If the content of the tacky adhesive is more than 4 parts by weight relative to 100 parts by weight of the raw material rubber, the rubber properties may be deteriorated.

The sidewall insert rubber composition may be produced through a conventional two-stage continuous production process. That is, the sidewall insert rubber composition can be produced in an appropriate mixing machine using a first step involving a thermomechanical treatment or kneading at a maximum temperature reaching up to 110°C to 190°C, and preferably a high temperature of 130°C to 180°C; and a second step involving a mechanical treatment typically at a temperature below 110°C, for example, a low temperature of 40°C to 100°C, during the finishing stage in which the crosslinked system is mixed; however, the present invention is not intended to be limited to this.

The sidewall insert rubber composition may include not only in the sidewall or sidewall insert, but also in various rubber constituent elements that constitute a tire. Examples of the rubber constituent elements include tread (tread cap and tread base), apex, chafer, wire coat, and inner liner.

A tire according to another aspect of the present invention is produced using the sidewall insert rubber composition for run-flat tire. Regarding the method for producing a rubber composition, any method that is conventionally used in the production of tires is applicable, and therefore, detailed explanation thereon will not be given in the present specification.

The tire may be a tire for passenger cars, a tire for racing cars, an airplane tire, a tire for agricultural machines, a tire for off-the-road driving, a truck tire, or a bus tire. Also, the tire may be a radial tire or a bias tire.

The sidewall insert rubber composition for run-flat tire of the present invention can realize excellent low fuel consumption performance by applying a functionalized, solution-polymerized butadiene rubber having a low glass transition temperature and thereby enhancing the interaction with fillers, and can provide a high strength sidewall insert rubber for low-heat generation run-flat tire by having an increased content of a filler.

### EXAMPLES

Hereinafter, Examples of the present invention will be described in detail so that a person having ordinary skill in the art to which the present invention is pertained, can easily carry out the invention. However, the present invention can be realized in various different forms, and is not intended to be limited to the Examples described herein.

### [Production Example: Production of rubber composition]

Sidewall insert rubber compositions for run-flat tire according to the following Examples and Comparative Examples were produced using the same compositions as indicated in the following Table 1. The production of the rubber compositions was carried out according to a conventional method for producing a rubber composition.

**[Table 1]**

| | Comparative Example 1 | Comparative Example 2 | Example 1 | Example 2 | Example 3 |
|---|---|---|---|---|---|
| Natural rubber (TSR 20 Grade) | 40 | 40 | 40 | 40 | 40 |
| Solution-polymerized BR⁽¹⁾ | 0 | 0 | 30 | 30 | 30 |
| High-cis BR⁽²⁾ | 60 | 60 | 30 | 30 | 30 |
| Carbon black⁽³⁾ | 45 | 45 | 45 | 60 | 40 |
| Silica⁽⁴⁾ | 0 | 0 | 0 | 0 | 20 |
| Coupling agent⁽⁵⁾ | 0 | 0 | 0 | 0 | 3 |
| Phenolic reinforcing resin | 3 | 3 | 3 | 0 | 0 |
| Processing aid | 2 | 2 | 2 | 2 | 2 |
| Process oil | 2 | 2 | 2 | 2 | 2 |
| Zinc oxide | 4 | 4 | 4 | 4 | 4 |
| Stearic acid | 2 | 2 | 2 | 2 | 2 |
| Anti-aging agent⁽⁶⁾ | 1 | 1 | 1 | 1 | 1 |
| Sulfur | 5 | 6 | 5 | 6 | 6 |
| Vulcanization accelerator 1⁽⁷⁾ | 1 | 1 | 1 | 0 | 0 |
| Vulcanization accelerator 2⁽⁸⁾ | 3 | 4 | 3 | 4 | 4 |
| Accelerator aid | 0.3 | 0.3 | 0.3 | 0.3 | 0.3 |

| | | | | | |
|---|---|---|---|---|---|
| (unit: parts by weight) (1) Solution-polymerized BR: A functionalized, solution-polymerized butadiene rubber having a glass transition temperature of -90°C and produced by functionalizing a solution-polymerized butadiene rubber having a vinyl content of 8% to 13% by weight with a tin coupling agent and an amine-based coupling agent (2) high-cis BR: A high-cis butadiene rubber having a glass transition temperature of -106°C (3) Carbon black; N660 (4) Silica: Highly dispersible silica having a nitrogen adsorption specific surface area of 120 m²/g and a CTAB adsorption specific surface area of 105 m²/g (5) Coupling agent: Bis(3-triethoxysilylpropyl) tetrasulfide (trade name: Si69, manufacturer: Degussa) (6) Anti-aging agent: 2,2,4-Trimethyl-1,2-dihydroquinoline (TMQ) (7) Vulcanization accelerator 1: Hexamethylenetetramine (8) Vulcanization accelerator 2: N-tert-butyl-2-benzothiazylsulfenamide | | | | | |

### [Experimental Example: Measurement of properties of rubber compositions produced]

Rubber specimens obtained by blending the rubber compositions produced in the Examples and Comparative Examples using a Banbury mixer were vulcanized at 168°C, and properties thereof were analyzed. The results are presented in the following Table 2.

**[Table 2]**

| | Comparative Example 1 | Comparative Example 2 | Example 1 | Example 2 | Example 3 |
|---|---|---|---|---|---|
| Hardness (ShoreA) | 74 | 79 | 74 | 80 | 82 |
| 50% Modulus | 34 | 42 | 35 | 51 | 52 |
| 100% Modulus | 65 | 80 | 64 | 86 | 93 |
| 60 °C Tan δ | 0.055 | 0.083 | 0.039 | 0.049 | 0.053 |

| | | | | | |
|---|---|---|---|---|---|
| (1) Hardness was measured according to DIN 53505. (2) The 50% modulus and the 100% modulus were measured according to the ISO 37 standards. (3) Viscoelasticity was measured using a DMTS analyzer under 5% strain at a frequency of 10 Hz and at 60°C. | | | | | |

In the above Table 2, higher values of the hardness, 50% modulus and 100% modulus mean higher strength of the sidewall insert rubber, and the 60°C tan δ represents the hysteresis of the rubber such that a lower value thereof indicates superior low fuel consumption performance.

According to Table 2, Example 1 exhibited its hardness, 50% modulus and 100% modulus of equivalent levels with a lower 60°C tan δ value as compared with Comparative Example 1, which is a common sidewall insert rubber for low fuel consumption, and thus it was confirmed that Example 1 has superior low fuel consumption performance. Furthermore, it was confirmed that Examples 2 and 3 exhibited their hardness, 50% moduli and 100% moduli of equivalent or higher levels compared with Comparative Example 2, which is a high hardness sidewall insert rubber, and Examples 2 and 3 had superior low fuel consumption performance compared with Comparative Example 2.

From the results described above, it could be confirmed that the sidewall insert rubber composition for run-flat tire of the present invention can realize excellent low fuel consumption performance by applying a functionalized, solution-polymerized butadiene rubber having a low glass transition temperature and thereby enhancing the interaction with fillers, and can provide a high strength sidewall insert rubber with less heat generation by increasing the content of a filler.

Preferred embodiments of the present invention have been described in detail in the above, but the scope of rights of the present invention is not intended to be limited thereto, and various modifications and improvements made by those having ordinary skill in the art by utilizing the basic inventive concept of the present invention as defined in the following claims are also included in the scope of rights of the present invention.

## Claims

1. A sidewall insert rubber composition for run-flat tire, comprising:
10 to 100 parts by weight of a raw material rubber including a functionalized, solution-polymerized butadiene rubber having a glass transition temperature of -95°C to - 70° and a vinyl content of 5% to 25% by weight; and
40 to 110 parts by weight of a filler having a carbon black and silica,
wherein the functionalized, solution-polymerized butadiene rubber is functionalized by any one coupling agent selected from the group consisting of a tin coupling agent, an amine-based coupling agent, a lactam-based coupling agent, and mixtures thereof.

2. The sidewall insert rubber composition for run-flat tire according to claim 1, wherein the functionalized, solution-polymerized butadiene rubber is included in an amount of 10 to 40 parts by weight relative to 100 parts by weight of the raw material rubber.

3. The sidewall insert rubber composition for run-flat tire according to claim 1, wherein the carbon black has an oil adsorption amount of 80 to 100 cc/100 g and an iodine adsorption amount of 25 to 45 mg/g.

4. The sidewall insert rubber composition for run-flat tire according to claim 1, wherein the carbon black is included in an amount of 40 to 70 parts by weight relative to 100 parts by weight of the raw material rubber.

5. The sidewall insert rubber composition for run-flat tire according to claim 4, wherein the silica has a nitrogen adsorption specific surface area of 80 to 20 m²/g and a cetyltrimethylammonium bromide (CTAB) adsorption specific surface area of 70 to 180 m²/g.

6. A tire produced using the sidewall insert rubber composition for run-flat tire according to claim 1.

## Patentansprüche

1. Seitenwandeinsatzgummimischung für Runflat-Reifen enthaltend:
10 bis 100 Gewichtsanteile eines Gummi-Ausgangsmaterials enthaltend einen funktionalisierten, lösungspolymerisierten Butadien-Kautschuk, welcher eine Glasübergangstemperatur von - 95°C bis - 70°C und einen Vinylgehalt von 5 Gew.-% bis 25 Gew.-% besitzt, sowie
40 bis 110 Gewichtsanteile eines Füllstoffs, der Ruß oder Silika aufweist,
wobei
der funktionalisierte, lösungspolymerisierte Butadien-Kautschuk durch ein Kopplungsmittel funktionalisiert ist, welches ausgewählt ist aus der Gruppe bestehend aus einem Zinn-Kopplungsmittel, einem Amin basierten Kopplungsmittel, einem Laktam basierten Kopplungsmittel sowie Mischungen derselben.

2. Seitenwandeinsatzgummimischung für Runflat-Reifen nach Anspruch 1, worin der funktionalisierte, lösungspolymerisierte Butadin-Kautschuk in einer Menge von 10 bis 40 Gewichtsanteilen bezogen auf 100 Gewichtsanteile des Gummi-Ausgangsmaterials enthalten ist.

3. Seitenwandeinsatzgummimischung für Runflat-Reifen nach Anspruch 1, worin der Ruß einen Öladsorptionsanteil von 80 bis 100 cc/100 g und einen Jod Adsorptionsanteil von 25 bis 45 mg/g besitzt.

4. Seitenwandeinsatzgummimischung für Runflat-Reifen nach Anspruch 1, worin der Ruß in einer Menge von 40 bis 70 Gewichtsanteilen bezogen auf 100 Gewichtsanteile des Gummi-Ausgangsmaterials enthalten ist.

5. Seitenwandeinsatzgummimischung für Runflat-Reifen nach Anspruch 4, worin das Silika eine spezifische Adsorptionsoberfläche für Stickstoff von 80 bis 20 m²/g und eine spezifische Adsorptions-Oberfläche für Cetyltrimethylammoniumbromid von 70 bis 180 m²/g aufweist.

6. Reifen hergestellt unter Verwendung einer Seitenwandeinsatzgummimischung für Runflat-Reifen nach Anspruch 1.

## Revendications

1. Composition de caoutchouc pour insert de flanc d'un pneu à roulage à plat, comprenant :
de 10 à 100 parties en poids d'une matière première de caoutchouc comprenant un caoutchouc butadiène fonctionnalisé polymérisé en solution ayant une température de transition vitreuse de - 95°C à -70°C et une teneur en vinyle de 5% à 25% en poids ; et
de 40 à 110 parties en poids d'une charge contenant un noir de carbone et silice,
dans laquelle le caoutchouc butadiène fonctionnalisé polymérisé en solution est fonctionnalisé par un agent de couplage choisi dans le groupe constitué par un agent de couplage à l'étain, un agent de couplage à base d'amines, un agent de couplage à base de lactame, et mélanges de ceux-ci.

2. Composition de caoutchouc pour insert de flanc d'un pneu à roulage à plat selon la revendication 1, dans laquelle le caoutchouc butadiène fonctionnalisé polymérisé en solution est présent à raison de 10 à 40 parties en poids par rapport à 100 parties en poids de la matière première de caoutchouc.

3. Composition de caoutchouc pour insert de flanc d'un pneu à roulage à plat selon la revendication 1, dans laquelle le noir de carbone a une valeur d'adsorption d'huile comprise entre 80 et 100 cc/100 g et une valeur d'adsorption d'iode comprise entre 25 et 45 mg/g.

4. Composition de caoutchouc pour insert de flanc d'un pneu à roulage à plat selon la revendication 1, dans laquelle le noir de carbone est présent à raison de 40 à 70 parties en poids par rapport à 100 parties en poids de la matière première de caoutchouc.

5. Composition de caoutchouc pour insert de flanc d'un pneu à roulage à plat selon la revendication 4, dans laquelle la silice a une surface spécifique d'adsorption d'azote comprise entre 80 et 20 m²/g et une surface spécifique d'adsorption de bromure de cétyltriméthylammonium bromide (CTAB) comprise entre 70 et 180 m²/g.

6. Pneu produit avec la composition de caoutchouc pour insert de flanc d'un pneu à roulage à plat selon la revendication 1.
